# EUROPÄISCHE PATENTSCHRIFT

(11) **EP 3 263 770 B1**
(45) Veröffentlichungstag und Bekanntmachung des Hinweises auf die Patenterteilung: **21.11.2018**
(21) Anmeldenummer: 17000915.3
(22) Anmeldetag: 30.05.2017
(51) Int. Cl.: E01C 19/23, E01C 19/27

(54) **BODENVERDICHTUNGSMASCHINE, INSBESONDERE GUMMIRADWALZE, MIT RADABDECKUNG**
SOIL COMPACTOR, IN PARTICULAR RUBBER WHEEL ROLLER, COMPRISING WHEEL COVER
MACHINE DE COMPACTAGE DE SOL, NOTAMMENT COMPACTEUR À PNEU, COMPRENANT UN REVÊTEMENT DE ROUE

(30) Priorität: 13.06.2016 DE 102016007162
(43) Veröffentlichungstag der Anmeldung: 03.01.2018
(73) Patentinhaber: BOMAG GmbH, 56154 Boppard (DE)
(72) Erfinder: Berg, Christian, 56288 Völkenroth (DE); Einolf, Ernst-Josef, 56154 Boppard (DE); Schönberg, Tobias, 56412 Oberelbert (DE)
(74) Vertreter: Heidler, Philipp

(56) Entgegenhaltungen:
- EP-A2- 0 864 694
- CN-U- 203 222 722
- FR-A- 1 464 849
- US-A1- 2008 292 401

## Beschreibung

Die Erfindung betrifft eine Bodenverdichtungsmaschine, insbesondere Gummiradwalze, zur Verdichtung eines Bodens in einer Arbeitsrichtung.

Gattungsgemäße Bodenverdichtungsmaschinen werden beispielsweise im Straßen- und Wegebau eingesetzt, wo sie beispielsweise den Boden vor der Verlegung einer Tragschicht, beispielsweise einer Asphaltdecke, verdichten und festigen sollen. Auch die auf den verdichteten Boden aufgebrachten Tragschichten werden mittels gattungsgemäßer Bodenverdichtungsmaschinen verdichtet und damit gefestigt. Für unterschiedliche Anwendungen sind dabei verschiedene Bodenverdichtungsmaschinen, beispielsweise Walzenzüge, Tandemwalzen oder Gummiradwalzen bekannt. Gattungsgemäße Bodenverdichtungsmaschinen weisen einen Maschinenrahmen und ein den Maschinenrahmen tragendes Fahrwerk auf, wobei das Fahrwerk einen vorderen Fahrwerksteil und einen hinteren Fahrwerksteil umfasst. Diese Fahrwerksteile können beispielsweise die vorderen und hinteren Bandagen einer Tandemwalze sein. Die in Arbeitsrichtung vorderen und hinteren Fahrwerksteile einer Gummiradwalze dagegen umfassen elastische Räder, beispielsweise Gummiräder, über die das Eigengewicht der Gummiradwalze auf den Bodenuntergrund übertragen wird und dort zu einer Verdichtung führt. Durch die elastischen Eigenschaften der Räder der Gummiradwalze kommt es zu einem vorteilhaften Knet- beziehungsweise Walkeffekt, wodurch Gummiradwalzen eine besonders homogene Verdichtung des Bodens und einen Porenschluss bzw. eine Versiegelung der Oberfläche erreichen. Die Erfindung betrifft insbesondere eine Bodenverdichtungsmaschine vom Typ Gummiradwalze. Eine gattungsgemäße Gummiradwalze ist beispielsweise mit dem Modell BW 25 RH der Anmelderin bekannt.

Um nach einer Überfahrt der Gummiradwalze eine möglichst glatte Oberfläche zu hinterlassen, ist es wichtig, dass an den Rädern der Gummiradwalze kein Bodenmaterial haften bleibt, vom Boden weggerissen wird und an anderer Stellte wieder in diesen eingedrückt wird. Ein Anhaften von Bodenmaterial an den Rädern soll also nach Möglichkeit vermieden oder zumindest minimiert werden. Es ist bekannt, dass das Anheften von Bodenmaterial an den Rädern einer Gummiradwalze von der Temperatur der Räder abhängt, derart, dass weniger Bodenmaterial an wärmeren Rädern haften bleibt. Im Betrieb der Gummiradwalze werden die Räder durch die Verformungsenergie ihres elastischen Materials sowie durch noch warme Asphaltschichten, die verdichtet werden, erwärmt. Um die Erwärmung der Räder zu unterstützen und ein schnelles Auskühlen nach Möglichkeit zu verhindern, ist es im Stand der Technik bekannt, thermisch isolierende Verhängungen an den Gummiradwalzen anzubringen, die vom Maschinenrahmen herabhängen und fast bis zum Bodenuntergrund reichen, wodurch die Räder zu einem gewissen Grad vor Wärmeverlust geschützt sind.

Problematisch gestaltet sich diese Verhängung allerdings bei Gummiradwalzen, die eine gelenkte und pendelnde Achse eines Fahrwerkteils aufweisen. Mit Fahrwerksteil wird vorliegend die Gruppe der vorderen (vorderer Fahrwerksteil) oder der hinteren (hinterer Fahrwerksteil) Fahreinrichtungen, insbesondere Gummiräder, bezeichnet. Die Fahreinrichtungen können dabei gruppiert betrieben werden. Diese Gruppen werden vorliegend als Fahrwerkseinheit bezeichnet. Ein insgesamt vier Einzelräder umfassender Fahrwerksteil, beispielsweise der vordere Fahrwerksteil, kann somit beispielsweise zwei Fahrwerkseinheiten mit jeweils zwei Gummirädern umfassen. Bei den betroffenen Gummiradwalzen weist wenigstens ein Fahrwerksteil wenigstens zwei Fahrwerkseinheiten auf, wobei jede Fahrwerkseinheit um eine eigene, in der Regel vertikale, Lenkachse drehbar und um eine, in der Regel horizontale, Pendelachse verstellbar ist und wenigstens ein Rad aufweist. Es ist zudem auch möglich, dass ergänzend oder alternativ für sämtliche Fahrwerkseinheiten eines Fahrwerksteils eine gemeinsame, in der Regel horizontale, Pendelachse vorgesehen ist. Beispielsweise weist das vordere Fahrwerksteil vier Räder auf, wobei jeweils ein Radpaar gemeinsam um eine Lenkachse drehbar und eine Pendelachse verstellbar ist. Soll die Gummiradwalze somit um eine Kurve fahren, ist eine jeweils separate Lenkbewegung der beiden Fahrwerkseinheiten um jeweils ihre eigene Lenkachse erforderlich. Um eine derartig gelenkte Gummiradwalze mit einer Radabdeckung zu versehen, die zur thermischen Isolation der Fahrwerkseinheiten gegenüber der Außenumgebung ausgebildet ist, wird üblicherweise, um den notwendigen Bewegungsraum der Fahrwerkseinheiten nicht einzuschränken, eine sehr große am Maschinenrahmen befestigte Radabdeckung verwendet, die sämtliche Räder einer Fahrwerkseinheit gleichzeitig und auch in verschiedenen Lenkpositionen abdeckt. Thermische Isolation ist dabei so zu verstehen, dass eine Einrichtung geschaffen wird, die das Abkühlen der Gummiräder aufgrund der kühleren Außenumgebung behindert bzw. verlangsamt. Um den Platzbedarf der Räder während eines Lenkvorganges zu berücksichtigen, muss mit andern Worten ein Raum von der Radabdeckung umschlossen werden, der sämtliche Positionen aller Räder in allen Lenkstellungen berücksichtigt. Die dadurch sehr ausladende Radabdeckung führt zu einer Vergrößerung der Gesamtmaße der Bodenverdichtungsmaschine, was sich nachteilig auf das Rangieren der Bodenverdichtungsmaschine und deren Transport, beispielsweise auf einem LKW, auswirkt. Darüber hinaus wird die präzise Steuerung der Bodenverdichtungsmaschine durch den Bediener erschwert, da dieser aufgrund der ausladenden Abdeckung keine direkte Sicht auf die Radkanten der Gummiradwalze hat. Die genannten Probleme treten insbesondere bei Gummiradwalzen auf, die die beschriebene Lenkung nutzen, bei der wenigstens an einem Fahrwerksteil mindestens zwei Fahrwerkseinheiten vorhanden sind, die jeweils eine eigene Lenkachse aufweisen. Eine derartige gattungsgemäße Gummiradwalze ist beispielsweise aus der EP 0 864 694 A2 bekannt.

Aufgabe der vorliegenden Erfindung ist es daher, eine Bodenverdichtungsmaschine, insbesondere eine Gummiradwalze, anzugeben, die eine verbesserte Radabdeckung zur thermischen Isolation der Fahrwerkseinheiten gegenüber der Außenumgebung aufweist. Insbesondere soll der Wärmeverlust der Räder an die Außenumgebung verringert werden und gleichzeitig eine bessere Handhabung der Maschine gewährleistet sein.

Die Lösung der Aufgabe gelingt mit einer Bodenverdichtungsmaschine gemäß dem unabhängigen Anspruch. Bevorzugte Ausführungsformen sind in den abhängigen Ansprüchen angegeben.

Konkret gelingt die Lösung der Aufgabe bei einer Eingangs genannten Bodenverdichtungsmaschine, insbesondere Gummiradwalze, dadurch, dass die Radabdeckung wenigstens zwei Radabdeckungseinheiten umfasst, wobei an jeder Fahrwerkseinheit eine Radabdeckungseinheit angeordnet ist, die zusammen mit der jeweiligen Fahrwerkseinheit um die jeweilige eigene Lenkachse rotierbar ist. Mit anderen Worten weist jede Fahrwerkseinheit eine eigene Radabdeckungseinheit auf, die zudem mit der jeweiligen Fahrwerkseinheit, insbesondere synchron bzw. um die gleiche Lenkachse, mitlenkend ausgebildet ist. Die Radabdeckungseinheiten sämtlicher Fahrwerkseinheiten eines jeweiligen Fahrwerksteiles bilden zusammen die Radabdeckung des Fahrwerksteiles. Diese ist also nicht wie im Stand der Technik am Maschinenrahmen montiert und überdeckt vom Maschinenrahmen aus das jeweilige Fahrwerksteil starr, sondern ist erfindungsgemäß in einzelne Module, die Radabdeckungseinheiten, aufgeteilt, die direkt an den Fahrwerkseinheiten befestigt sind und sich insbesondere mit diesen bei deren Lenkbewegungen mitbewegen. Die Radabdeckungseinheiten sind also jeweils so ausgebildet, dass sie das wenigstens eine Rad der jeweiligen Fahrwerkseinheit zumindest teilweise derart umhüllen, dass das wenigstens eine Rad durch die Radabdeckungseinheit gegenüber der Außenumgebung thermisch isoliert ist. Durch die Befestigung der Radabdeckungseinheiten jeweils am beweglichen Teil einer Fahrwerkseinheit erfolgt ergänzend zur Mitbewegung der Radabdeckungseinheiten bei Lenkbewegungen ferner bevorzugt auch sowohl eine Mitbewegung der Radabdeckungseinheiten bei Pendelbewegungen der Fahrwerkseinheiten um eine eigene Pendelachse als auch des jeweiligen Fahrwerksteils um eine gemeinsame, zentrale Pendelachse.

Durch die erfindungsgemäße mitlenkende Ausbildung der Radabdeckung bzw. der wenigstens zwei Radabdeckungseinheiten und insbesondere deren Aufteilung in je eine Radabdeckungseinheit pro Fahrwerkseinheit, wird es ermöglicht, die einzelnen Radabdeckungseinheiten und damit auch die gesamte Radabdeckung deutlich kleiner und kompakter auszuführen als eine Radabdeckung des Standes der Technik, die mehr oder weniger starr das gesamte Fahrwerksteil umgibt und auch Platz für Lenkbewegungen der Fahrwerkseinheiten mit umschließen muss. Es wird ferner ermöglicht, dass die Radabdeckungseinheiten zudem Pendelbewegungen der Fahrwerkseinheiten und der Fahrwerksteile zusammen mit den Gummirädern nachvollziehen. Die erfindungsgemäßen Radabdeckungseinheiten umgeben die Räder bzw. die Fahrwerkseinheiten deutlich enger als bislang bekannte Radabdeckungen. Dadurch wird zum einen die thermische Isolation der Räder gegenüber der Außenumgebung verbessert, wodurch weniger Wärme der Räder beispielsweise durch Konvektion durch Zugluft, verloren geht. Dadurch beschleunigt sich die Erwärmung der Räder zu Beginn eines Arbeitsvorganges und verringert sich die Materialanhaftung an den Rädern. Darüber hinaus wird durch die Verkleinerung der Radabdeckung ermöglicht, dass der Bediener der Bodenverdichtungsmaschine deutlich näher an die Kanten der Räder heran sehen kann, wodurch die Bedienung der Bodenverdichtungsmaschine und insbesondere das präzise Steuern entlang einer vorgegebenen Fahrspur erleichtert wird. Zudem ist durch die geringere Größe der Radabdeckung gemäß der vorliegenden Erfindung auch das Rangieren und der Transport der Bodenverdichtungsmaschine von einer Baustelle zur nächsten, beispielsweise auf einem LKW, erleichtert.

Erfindungsgemäß bilden die wenigstens zwei Radabdeckungseinheiten des vorderen oder hinteren Fahrwerksteils die Radabdeckung, wobei es auch vorgesehen sein kann, dass sowohl für den vorderen als auch für den hinteren Fahrwerksteil jeweils eine erfindungsgemäße Radabdeckung vorhanden ist. Um den Wärmeverlust der Räder gegenüber der Außenumgebung möglichst zu minimieren, ist es vorteilhaft, wenn die Fahrwerkseinheiten zur Außenumgebung hin im Wesentlichen vollständig umgeben sind. Gleichzeitig ist es vorteilhaft, die Radabdeckung möglichst klein und kompakt zu gestalten und den thermischen Isolationsraum möglichst klein zu halten. Darüber hinaus ist es bei den erfindungsgemäßen mitlenkenden Radabdeckungseinheiten so, dass diese sich, je nach Lenkeinschlag der Bodenverdichtungsmaschine, gegeneinander verdrehen und ihre Relativposition, insbesondere ihre Stellung, zueinander ändern. Dadurch kann sich zwischen zwei Fahrwerkseinheiten beispielsweise ein Zwischenraum oder ein Spalt zwischen den einzelnen Radabdeckungseinheiten öffnen, durch den hindurch Luft von der Außenumgebung, beispielsweise Zugluft, an die Räder dringen kann. Da die Bodenverdichtungsmaschine im Arbeitsbetrieb die meiste Zeit geradeaus fährt, sollte die Radabdeckung derart ausgebildet sein, dass die thermische Isolation der Fahrwerkseinheiten am größten ist, wenn diese sich in der Stellung zur Geradeausfahrt befinden.

Es ist daher bevorzugt, dass die Radabdeckungseinheiten derart ausgebildet sind, dass sie bei Geradeausfahrt der Bodenverdichtungsmaschine, insbesondere zusammen mit dem Maschinenrahmen, sämtliche Fahrwerkeinheiten zur Außenumgebung hin im Wesentlichen vollständig umgeben. Auf diese Weise wird sichergestellt, dass im häufigsten Betriebsmodus der Bodenverdichtungsmaschine eine maximale thermische Isolation bereitgestellt wird. Die thermische Isolation der Fahrwerkseinheiten bzw. der Räder kann dabei nicht nur durch die Radabdeckung erfolgen, sondern ebenfalls durch Anteile des Maschinenrahmens der Bodenverdichtungsmaschine, der die Fahrwerkseinheiten bzw. die Räder insbesondere im Bereich in Arbeitsrichtung hinter den Fahrwerkseinheiten und vertikal über den Fahrwerkseinheiten umgibt. Vertikal über den Fahrwerkseinheiten bezeichnet diejenige Seite der Fahrwerkseinheiten, die im Arbeitsbetrieb vom zu verdichtenden Boden weg gerichtet ist. In diesen Bereichen befindet sich der Maschinenrahmen der Bodenverdichtungsmaschine derart nah an den Fahrwerkseinheiten, dass der Maschinenrahmen ebenfalls verhindert, dass hier übermäßig Wärmeenergie von den Fahrwerkseinheiten bzw. Rädern an die Außenumgebung verloren geht. Es ist also eine Ausführungsform der Erfindung bevorzugt, in der die Fahrwerkseinheiten bei Geradeausfahrt durch die Radabdeckung, und insbesondere auch durch den Maschinenrahmen, im Wesentlichen vollständig zur Außenumgebung hin isoliert bzw. umgeben sind. Dass beispielsweise bei Kurvenfahrten durch den Lenkeinschlag Zwischenräume zwischen den Radabdeckungseinheiten entstehen, wird bei dieser Ausführungsform in Kauf genommen, da Kurvenfahrten nur einen Bruchteil der Betriebszeit der Bodenverdichtungsmaschine in Anspruch nehmen. Auf diese Weise kann eine besonders einfach gestaltete Radabdeckung eingesetzt werden deren Dimensionen und Herstellungskosten besonders klein sind. Alternativ kann auch vorgesehen sein, dass ein Ausgleichelement, beispielsweise ein insbesondere flexibler Vorhang, vorgesehen ist, über das der bei einem Lenkeinschlag entstehende Freiraum (Zwischenraum zwischen den Radabdeckungen) ergänzend zu den Radabdeckungen geschlossen werden kann.

Die Ausbildung der erfindungsgemäßen Radabdeckung variiert, je nachdem, wie viele Fahrwerkseinheiten das betroffene Fahrwerksteil umfasst. Typischerweise umfassen gattungsgemäße Gummiradwalzen an ihrem vorderen Fahrwerksteil zumindest und insbesondere genau zwei Fahrwerkseinheiten mit jeweils zwei Rädern. Bei einer derartigen Gummiradwalze kann die jeweilige Radabdeckungseinheit der beiden Fahrwerkseinheiten gleich, bzw. spiegelsymmetrisch zueinander, ausgebildet sein. In dieser Ausführungsform, in der das Fahrwerksteil, insbesondere genau, zwei Fahrwerkseinheiten mit jeweils einer Radabdeckungseinheit umfasst, ist es bevorzugt, dass jede Radabdeckungseinheit eine Frontschürze, eine Haube und eine Seitenschürze aufweist. Als Frontschürze wird dabei derjenige Anteil der Radabdeckungseinheit bezeichnet, der sich im Wesentlichen in Arbeitsrichtung vor der Fahrwerkseinheit bzw. dem wenigstens einen Rad befindet und eine thermische Isolation in diesem Bereich bewirkt. Als Seitenschürze wird derjenige Teil einer Radabdeckungseinheit bezeichnet, der quer zur Arbeitsrichtung außen an der Radabdeckungseinheit bzw. der Fahrwerkseinheit liegt und an den sich insbesondere keine weitere Fahrwerkseinheit bzw. Radabdeckungseinheit anschließt. Die Seitenschürzen sind daher im Wesentlichen parallel zur Längsachse bzw. zur Arbeitsrichtung der Bodenverdichtungsmaschine angeordnet. Als Haube wird derjenige Teil einer Radabdeckungseinheit bezeichnet, der im Wesentlichen vertikal über der Fahrwerkseinheit bzw. dem wenigstens einen Rad und/oder in Arbeitsrichtung hinter der Fahrwerkseinheit bzw. dem wenigstens einen Rad angeordnet ist. Die Haube zieht sich dabei insbesondere vom vertikal über der Fahrwerkseinheit bzw. vom auf der vom Boden weggerichteten Seite der Fahrwerkseinheit liegenden Bereich bis in den Bereich in Arbeitsrichtung der Bodenverdichtungsmaschine hinter der Fahrwerkseinheit. Idealerweise ist die Haube ferner aus einer Abdeckposition, in der Sie das wenigstens eine Gummirad abdeckt, in eine Offenposition verstellbar ausgebildet. Damit kann je nach Bedarf durch öffnen der Haube ein Sichtbereich in die Radabdeckungseinheit eingebracht werden, um beispielsweise die Sicht auf die Gummiräder freizugeben, was beispielsweise zu Inspektionszwecken oder im laufenden Arbeitsbetrieb zur Prozessbeobachtung, insbesondere um das Anhaften von Material an den Gummirädern kontrollieren zu können, vorteilhaft sein kann. Dabei auftretende Verluste in der Wärmeisolation können in der Regel vernachlässigt werden. Ergänzend oder alternativ kann es auch vorgesehen sein, eine zwischen einer Abdeckposition und einer Offenposition verstellbare Sichtklappe in der Haube vorzusehen, so dass dann nicht die gesamte Haube, sondern lediglich die kleinere Sichtklappe geöffnet wird, wodurch auftretende Isolationsverluste minimiert werden können. Ferner sind bevorzugt geeignete Befestigungsmittel vorgesehen, in den die Haube und/oder die Sichtklappe in der Abdeckposition und/oder der Offenposition feststellbar sind, um eine zuverlässige Positionierung zu ermöglichen. Eine alternative Ausführungsform sieht es vor, die Haube wenigstens teilweise transparent auszubilden, um die Sicht auf die Räder von außen freizugeben. Die vorstehenden Ausführungen gelten für den hinteren Fahrwerksteil analog, nur das anstelle der Frontschürze dann entsprechend eine Heckschürze vorgesehen ist. Nachstehende Ausführungen zur Frontschürze betreffen somit gleichermaßen auch Varianten mit Heckschürze.

In Ausführungsformen, in denen zumindest ein Fahrwerksteil dagegen drei oder mehr Fahrwerkseinheiten umfasst, weisen die quer zur Arbeitsrichtung außen angeordneten Fahrwerkseinheiten jeweils gleiche bzw. spiegelsymmetrische Radabdeckungseinheiten auf, während die zwischen diesen Fahrwerkseinheiten angeordneten Fahrwerkseinheiten andere Radabdeckungseinheiten aufweisen. So können diese zusätzlichen Fahrwerkseinheiten beispielsweise Radabdeckungseinheiten aufweisen, die eine Frontschürze/Heckschürze und insbesondere eine Haube aufweisen. Eine Seitenschürze wird an diesen Radabdeckungseinheiten dagegen nicht benötigt, kann aber auch vorgesehen sein.

Die Frontschürze/Heckschürze, die Haube und die Seitenschürze sind diejenigen Anteile der Radabdeckung, die im Wesentlichen für eine Wärmeisolation gegenüber der Außenumgebung sorgen. Sie sind daher vorzugsweise aus einem thermisch isolierenden Material, beispielsweise Kunststoff bzw. Gummi, hergestellt. Beispielsweise handelt es sich um flexible Matten, die an den Fahrwerkseinheiten aufgehängt werden können. So ist es beispielsweise vorteilhaft, wenn die Frontschürze/Heckschürze und/oder die Seitenschürze und/oder die Haube einrollbar ausgebildet sind. In diesem Fall kann die thermische Isolation der Fahrwerkseinheiten durch die Radabdeckung in Anwendungsfällen, in denen diese nicht benötigt wird, durch das Aufrollen und im aufgerollten Zustand Feststellen der Frontschürze und/oder der Seitenschürze und/oder der Haube unterbunden werden. Gleichzeitig kann in diesem Arbeitsbetriebsmodus der Bediener frei auf die Räder blicken und die Bodenverdichtungsmaschine dadurch besonders genau steuern. Eine besonders dichte Ausbildung der Radabdeckung und damit eine besonders vorteilhafte thermische Isolierung lassen sich erreichen, wenn die Frontschürze und/oder die Seitenschürze und/oder die Haube gemäß einer bevorzugten Ausführungsform der Erfindung zusammen einstückig ausgebildet sind. Auf diese Weise werden Zwischenräume zwischen den einzelnen Anteilen vermieden, wodurch der Luftaustausch zwischen der Außenumgebung und den Fahrwerkseinheiten verringert wird.

Um die Wärmeisolation der einzelnen Fahrwerkseinheiten gegenüber der Außenumgebung weiter zu verbessern, müssen auch Zwischenräume bzw. Spalten oder Lücken zwischen den einzelnen Radabdeckungseinheiten nach Möglichkeit vermieden werden. Hierzu ist es vorteilhaft, wenn die Radabdeckungseinheiten, insbesondere an den Frontschürzen, jeweils wenigstens ein Dichtelement aufweisen, das derart ausgebildet ist, dass es bei Geradeausfahrt der Bodenverdichtungsmaschine am Dichtelement einer angrenzenden Radabdeckungseinheit anliegt und/oder mit diesen überlappt, so dass ein Zwischenraum zwischen zwei angrenzenden Radabdeckungseinheiten verschlossen ist. Insbesondere sind die Dichtelemente elastisch ausgebildet. Die Dichtelemente können beispielsweise als Dichtlippen ausgebildet sein, die die Frontschürzen der Radabdeckungseinheiten, insbesondere im einander zugewandten Bereich, bei Geradeausfahrt der Bodenverdichtungsmaschine zu einer einheitlichen, geschlossenen Abdeckung, beispielsweise durch teilweise Überlappung, vereinen. Die Dichtelemente könnten alternativ ebenfalls fingerartige Elemente aufweisen und/oder beispielsweise eine Bürste umfassen. So können beispielsweise die Borsten zweier angrenzender Radabdeckungseinheiten miteinander überlappen und für einen Verschluss des Zwischenraumes zwischen den beiden Radabdeckungseinheiten bzw. deren Frontschürzen sorgen. Auf diese Weise lässt sich ein besonders einfacher Verschluss des Zwischenraumes zwischen zwei Radabdeckungseinheiten zumindest während der Geradeausfahrt einer Bodenverdichtungsmaschine erreichen.

Die Radabdeckungseinheiten bewegen sich während der Kurvenfahrt durch die jeweilige Lenkung der Fahrwerkseinheiten und damit durch die jeweils gleichgerichtete Verdrehung der Radabdeckungseinheiten zueinander derart voneinander weg, dass beispielsweise die Frontschürzen der Radabdeckungseinheiten zueinander versetzt werden und damit keine einheitliche Abdeckung mehr bilden. Es kommt zwischen den einzelnen Fahrwerkseinheiten zur Bildung eines Freiraums bzw. Zwischenraums, durch den Luft aus der Außenumgebung in Kontakt mit dem wenigstens einen Rad der Fahrwerkseinheiten kommt. Um den Luftaustausch der Fahrwerkseinheiten mit der Außenumgebung und damit den Wärmeverlust durch Konvektion möglichst gering zu halten, ist es nun bevorzugt, dass die Dichtelemente derart ausgebildet sind, dass während einer Kurvenfahrt wenigstens ein Dichtelement im Zwischenraum zwischen zwei angrenzenden Radabdeckungseinheiten an einem Rad, insbesondere an dessen Stirnseite, der benachbarten Fahrwerkseinheit und/oder dem Rand der benachbarten Radabdeckungseinheit entlang gleitet bzw. anliegt bzw. zumindest nahe heranragt. Mit anderen Worten sorgt das Dichtelement dafür, dass während einer Kurvenfahrt ein Abschluss zwischen der Frontschürze der einen Radabdeckungseinheit und beispielsweise dem wenigstens einen Rad der benachbarten Fahrwerkseinheit besteht und während der Kurvenfahrt aufrecht erhalten wird. Durch diesen Abschluss wird verhindert, dass Zugluft aus der Außenumgebung uneingeschränkt in den gesamten Bereich der Fahrwerkseinheiten gelangt und dort zu einem erhöhten Wärmeverlust führt. Gemäß der bevorzugten Ausführungsform wird der Zwischenraum zwischen der Frontschürze der einen Radabdeckungseinheit und dem wenigstens einen Rad der benachbarten Fahrwerkseinheit vom Dichtelement überbrückt und insbesondere verschlossen.

Ergänzend oder alternativ zu einer derartigen, zumindest temporären, Überbrückung des Zwischenraumes durch die Dichtelemente, könnte die erfindungsgemäße Radabdeckung auch derart ausgebildet sein, dass jede Radabdeckungseinheit für sich die Fahrwerkseinheit, an der sie angeordnet ist, auch in den Bereichen umgibt bzw. isoliert, in denen eine weitere Fahrwerkseinheit und/oder der Maschinenrahmen der Bodenverdichtungsmaschine angrenzt. So ist es beispielsweise möglich, dass die Radabdeckungseinheiten jeweils auf den einander zugewandten Seiten jeweils eine zusätzliche Seitenschürze aufweisen, derart, dass jede Radabdeckungseinheit, insbesondere zusammen mit dem Maschinenrahmen, eine Fahrwerkseinheit zur Außenumgebung hin im Wesentlichen vollständig umgibt. Jede Fahrwerkseinheit weist somit eine eigene thermische Kapselung auf, die jeweils für sich die Lenkbewegungen mitvollzieht. Insbesondere sind sämtliche Radabdeckungseinheiten sämtlicher Fahrwerkseinheiten der Bodenverdichtungsmaschine gemäß diesem Ausführungsbeispiel identisch oder spiegelverkehrt ausgebildet. Jede Radabdeckungseinheit kann beispielsweise eine Frontschürze, zwei einander gegenüberliegende Seitenschürzen, die quer zur Arbeitsrichtung voneinander beabstandet sind, und insbesondere auch eine Haube aufweisen. Dadurch, dass jede Fahrwerkseinheit auf ihren quer zur Arbeitsrichtung außen liegenden Seiten jeweils eine Seitenschürze aufweist wird vermieden, dass während einer Kurvenfahrt ein Zwischenraum zwischen den Frontschürzen entsteht. Auch bei Arbeitsbedingungen, die häufige oder langzeitige Kurvenfahrten beinhalten, lässt sich auf diese Art und Weise eine verlässliche Wärmeisolierung der Fahrwerkeinheiten sicherstellen.

Aufgrund der eingangs beschriebenen Lenkung der Bodenverdichtungsmaschine mit wenigstens zwei Fahrwerkseinheiten pro Fahrwerksteil umfasst jede Fahrwerkseinheit eine eigene Lagereinrichtung, insbesondere Lagersäule, die die Fahrwerkseinheit mit dem Maschinenrahmen der Bodenverdichtungsmaschine verbindet. Die Lenkachse der jeweiligen Fahrwerkseinheit liegt typischerweise in der Lagersäule und wird beispielsweise durch ein entsprechendes Drehgelenk realisiert. Die erfindungsgemäße Radabdeckung ist an die Verwendung derartiger Fahrwerkseinheiten angepasst. Bevorzugt ist insbesondere eine Ausführung, in der die Radabdeckungseinheiten jeweils eine Ausnehmung, insbesondere in der Haube, aufweisen, durch die eine Lagersäule der Fahrwerkseinheit mit dem Maschinenrahmen verbunden ist. Die Radabdeckungseinheit kann beispielsweise derart ausgeführt sein, dass sie bündig mit der Lagersäule der Fahrwerkseinheit abschließt und eng, insbesondere im Wesentlichen luftdicht, an der Lagersäule anliegt, so dass ein Wärmeverlust der Fahrwerkseinheit bzw. der Räder über die Ausnehmung verhindert wird.

Theoretisch kann die Radabdeckungseinheit in sich starr ausgeführt sein. Hierzu kommen beispielsweise haubenartige Ausführungsformen in Betracht, beispielsweise aus Kunststoff oder Metall. In der Praxis haben sich allerdings eine flexible Radabdeckung bzw. flexible Radabdeckungseinheiten bewährt, beispielsweise aus flexiblen Kunststoff- und/oder Gummimatten. In diesem Fall ist an den Fahrwerkseinheiten eine, insbesondere in der Art eines Halterahmens ausgebildete, Aufhängung vorgesehen, über die die Matten der Radabdeckungseinheiten befestigt werden können. In einer bevorzugten Ausführungsform umfassen die Radabdeckungseinheiten daher einen Montagerahmen, der an den Fahrwerkseinheiten angeordnet ist und an den die Frontschürze, die Haube und die Seitenschürze befestigbar sind. Der Montagerahmen bildet ein Gestell bzw. ein Gerüst, an dem diejenigen Teile der Radabdeckungseinheit montiert bzw. angehängt werden können, die für die thermische Isolation der Fahrwerkseinheiten gegenüber der Außenumgebung sorgen. Dazu kann der Halterahmen beispielsweise starre Haltestreben umfassen, an denen anschließend die flexiblen Abdeckmatten montiert werden. Der Montagerahmen legt dabei insbesondere den Abstand der einzelnen Anteile der Radabdeckungseinheit zum wenigstens einen Rad bzw. zur Fahrwerkseinheit fest. Er beeinflusst damit das Volumen an Luft, das sich unter der Radabdeckung befindet, wodurch er einen direkten Einfluss auf den Wärmeverlust des wenigstens einen Rades nimmt. Der Montagerahmen ist bevorzugt von der Fahrwerkseinheit lösbar ausgebildet, beispielsweise derart, dass der Montagerahmen über einen Schnellverschluss an der Fahrwerkseinheit angebracht und auch von dieser entfernt werden kann. Auf diese Weise kann der Montagerahmen und damit die Radabdeckung von der Bodenverdichtungsmaschine bei Bedarf leicht entfernt werden, wenn der Einsatz einer Radabdeckung nicht notwendig ist. Darüber hinaus ermöglicht eine derartige Ausbildung des Montagerahmens bzw. der Radabdeckung eine optionale Nachrüstung der Radabdeckung gemäß der Erfindung. Der Montagerahmen umfasst Befestigungsmittel, mit denen die Frontschürze, die Haube und die Seitenschürze am Montagerahmen befestigbar sind. Dies können beispielsweise Seile und Ösen sein, wobei die Seile durch entsprechende Ösen an der Frontschürze, der Haube und/oder der Seitenschürze derart hindurchfädelbar sind, dass diese am Montagerahmen befestigt werden.

Wesentlich für die Erfindung ist, dass die Radabdeckungseinheiten, mit den Rädern mitlenkend ausgebildet sind. Die konkrete Befestigung der Radabdeckungseinheiten erfolgt daher idealerweise an einem sich durch die Lenkbewegung bewegenden Teil bzw. Bereich der Maschine. Die ist insbesondere die Tragstruktur der Räder zum Maschinenrahmen hin oder das Rad bzw. Radpaar selbst bzw. die Räder eines Radpaares verbindende Strukturen. Die konkrete Befestigung der Radabdeckungseinheiten und insbesondere des Montagerahmens erfolgt ferner bevorzugt über lösbares Verbindungen, um die Radabdeckungseinheiten bei Bedarf an- und abbauen zu können. Dazu kann auf geeignete Befestigungsmittel zurückgegriffen werden, beispielsweise Schraubverbindungen. Um einen schnellen An- und Abbau zu ermöglichen, können hier allerdings ergänzend oder alternativ auch, insbesondere werkzeuglos lösbare, Formschlussverbindungen, ganz besonders Klemm- und/oder Rastverbindung, wie beispielsweise Verbindungen mit Klemmfedern, Halteschienen etc., genutzt werden.

Sollte trotz aller Gegenmaßnahmen dennoch einmal Bodenmaterial am Rad der Bodenverdichtungsmaschine haften bleiben, so ist es üblich, Abstreifeinrichtungen an den Fahrwerkseinheiten vorzusehen, die insbesondere die Laufflächen der Räder von anhaftendem Bodenmaterial befreien. Um die Konstruktion der Bodenverdichtungsmaschine weiter zu vereinfachen, ist es in einer bevorzugten Ausführungsform vorgesehen, dass die Radabdeckungseinheiten jeweils eine Abstreifeinrichtung aufweisen, die dazu ausgebildet ist, an dem wenigstens einen Rad der Fahrwerkseinheit anhaftendes Bodenmaterial abzustreifen. Die Abstreifeinrichtung ist also an der Radabdeckungseinheit, und insbesondere am Montagerahmen, angeordnet. Durch die gemeinsame Ausführung von Radabdeckungseinheit und Abstreifeinrichtung kann weiter Bauraum eingespart werden. Ergänzend oder alternativ kann der Montagerahmen auch als Tragstruktur für weitere Elemente genutzt werden. Dies können konkret insbesondere Zusatzbauteile, wie beispielsweise Bürsten und Kokosmatten sein. Es ist auch möglich, Teile einer Berieselungsanlage, wie beispielsweise Sprühbalken oder einzelne Düsen, an dem Montagerahmen anzubringen, wodurch insbesondere eine geschlossene Ausbildung der Radabdeckungseinheiten auch bei Verwendung dieser Zusatzbauteile gelingt.

Grundsätzlich wäre es möglich, dass jede Fahrwerkseinheit der Gummiradwalze genau ein Rad, genau drei Räder oder sogar noch mehr Räder aufweist. Es hat sich allerdings gezeigt, dass die Erfindung besonders vorteilhaft umzusetzen ist, wenn jede Fahrwerkseinheit genau zwei Räder aufweist. Auf diese Weise kann sowohl die thermische Isolation der Fahrwerkseinheiten als auch die weiteren Vorteile der kompakten Dimensionierung der Radabdeckung gemäß der Erfindung voll ausgeschöpft werden.

Wichtig ist somit die Ausbildung einer Radabdeckung zur Verwendung an einer Bodenverdichtungsmaschine, wobei die Radabdeckung gemäß den vorstehenden Ausführungen ausgebildet ist. Zur Vermeidung von Wiederholungen wird insbesondere auch auf die vorstehenden Ausführungen zur Ausbildung der Radabdeckung Bezug genommen. Demnach zeichnet sich die Radabdeckung insbesondere durch eines oder mehrere der folgenden Merkmale aus:
- sie umfasst einen Montagerahmen, insbesondere zur Anbindung an eine Fahrwerkseinheit;
- sie umfasst eine Frontschürze, eine Haube und wenigstens eine und insbesondere genau eine Seitenschürze;
- sie ist auf der der genau einen Seitenschürze gegenüberliegenden Seite offen ausgebildet;
- die Frontschürze und/oder die Seitenschürze und/oder die Haube sind zusammen einstückig ausgebildet, insbesondere aus einem flexiblem Material;
- sie umfasst wenigstens ein Dichtelement, insbesondere auf der der Seitenschürze gegenüberliegenden Stirnseite;
- sie umfasst eine Halteeinrichtung, mit der sie an der Bodenverdichtungsmaschine, insbesondere an einer Fahrwerkseinheit, befestigbar ist;
- sie umfasst eine Ausnehmung zur Durchführung einer Lagersäule.

Die Erfindung wird nachstehend anhand der in den Figuren gezeigten Ausführungsbeispiele näher erläutert. Es zeigen schematisch:
- Fig. 1: eine Seitenansicht einer Bodenverdichtungsmaschine;
- Fig. 2: eine Vorderansicht der Bodenverdichtungsmaschine aus Fig. 1;
- Fig. 3: eine perspektivische Ansicht einer Bodenverdichtungsmaschine bei Geradeausfahrt mit Radabdeckung;
- Fig. 4: eine Draufsicht auf den vorderen Fahrwerksteil der Bodenverdichtungsmaschine gemäß Figur 3;
- Fig. 5: eine perspektivische Ansicht der Bodenverdichtungsmaschine aus Fig. 3 bei Kurvenfahrt nach links;
- Fig. 6: eine Draufsicht auf den vorderen Fahrwerksteil der Bodenverdichtungsmaschine gemäß Figur 5;
- Fig. 7: eine perspektivische Ansicht der Bodenverdichtungsmaschine aus Fig. 3 bei Kurvenfahrt nach rechts;
- Fig. 8: eine Draufsicht auf das vordere Fahrwerksteil der Bodenverdichtungsmaschine gemäß Figur 7;
- Fig. 9: eine perspektivische Ansicht einer Radabdeckung bei Geradeausfahrt gemäß Fig. 3; und
- Fig. 10: eine perspektivische Ansicht einer Radabdeckung bei einer Kurvenfahrt nach links gemäß Fig. 5.

Gleiche oder gleich wirkende Bauteile werden in den Figuren mit gleichen Bezugszeichen bezeichnet. Sich wiederholende Bauteile sind nicht zwingend in jeder Figur gesondert bezeichnet.

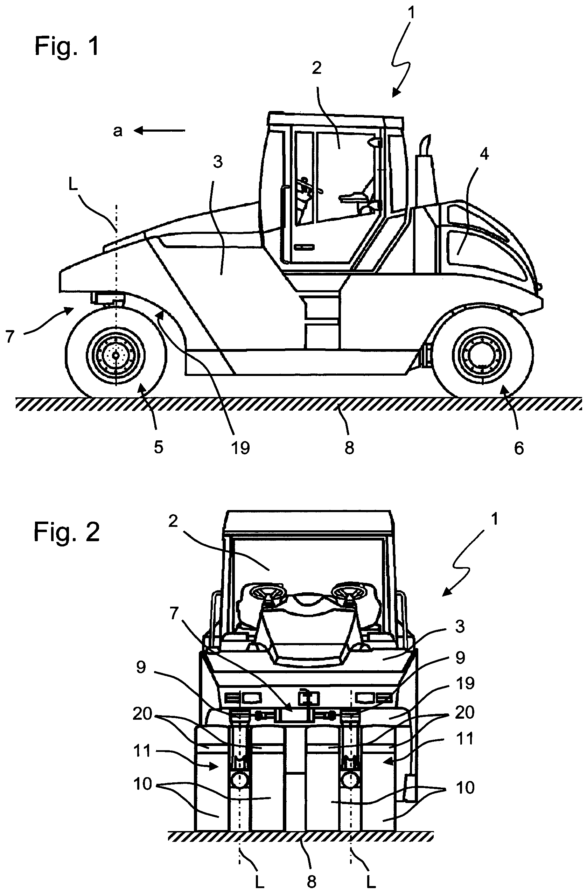

Die Figuren 1 und 2 zeigen eine gattungsgemäße Bodenverdichtungsmaschine 1 mit einem Fahrerstand 2 und einem Maschinenrahmen 3. Darüber hinaus weist die Bodenverdichtungsmaschine 1 ein von einem Antriebsaggregat 4, zumeist ein Dieselverbrennungsmotor, angetriebenes Fahrwerk auf, das im gezeigten Ausführungsbeispiel einen vorderen Fahrwerksteil 5 und einen hinteren Fahrwerksteil 6 umfasst. Im Arbeitsbetrieb der Bodenverdichtungsmaschine 1 bewegt sich diese in Arbeitsrichtung a über den Boden 8 und verdichtet diesen. Figur 2 zeigt Details des vorderen Fahrwerkteils 5. Der vordere Fahrwerkteil 5 umfasst eine Lenkeinrichtung 7 und zwei Fahrwerkseinheiten 11. Die Fahrwerkseinheiten 11 umfassen jeweils zwei Räder 10 und eine lenkbare Lagersäule 9. Die Fahrwerkseinheiten 11 sind jeweils an den Lagersäulen 9 um vertikale und parallel zueinander verlaufende Lenkachsen L zur Lenkung der Bodenverdichtungsmaschine 1 rotierbar ausgebildet. Ferner ist jedem Rad 10 eine Abstreifeinrichtung 20 zugeordnet. Wie eingangs beschrieben ist es im Arbeitsbetrieb der Bodenverdichtungsmaschine 1 vorteilhaft, wenn die Räder 10 gegenüber der Au-βenumgebung wärmeisoliert sind.

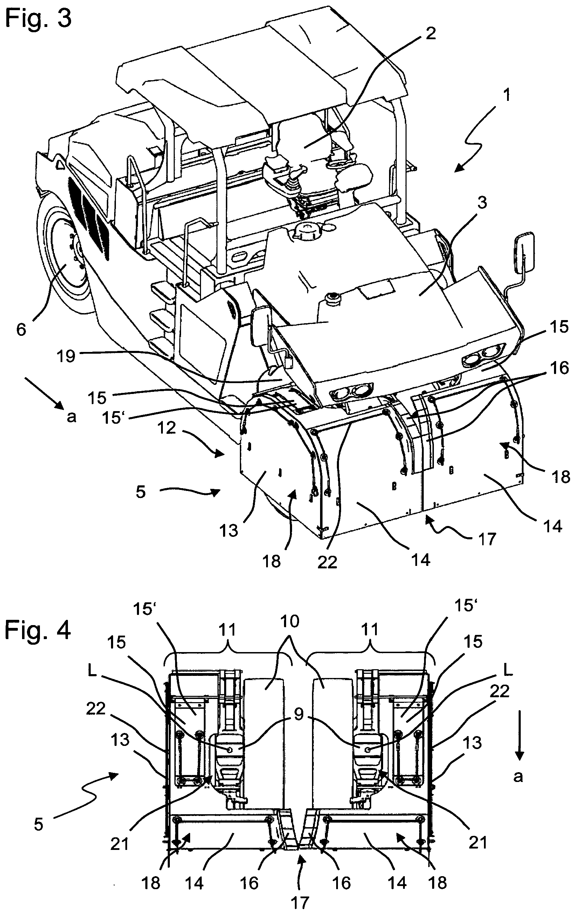

Um dies zu erreichen, ist erfindungsgemäß eine Radabdeckung 12 vorgesehen, wie sie in den Figuren 3 bis 10 dargestellt ist. Die Figuren 3 und 4 zeigen die Bodenverdichtungsmaschine bzw. den vorderen Fahrwerksteil 5 mit der Radabdeckung 12 bei Geradeausfahrt. Die Radabdeckung 12 umfasst eine Radabdeckungseinheit 18 für jede Fahrwerkseinheit 11. Im gezeigten Ausführungsbeispiel besteht die Radabdeckung 12 also aus zwei Radabdeckungseinheiten 18, wobei jeweils eine Radabdeckungseinheit 18 einer Fahrwerkseinheit 11 zugeordnet ist. Jede Radabdeckungseinheit 18 jeder Fahrwerkseinheit 11 umfasst eine Seitenschürze 13, eine Frontschürze 14 und eine Haube 15. Diese sind jeweils als Gummimatten ausgeführt, die an einem Montagerahmen 22 und über diesen Montagerahmen 22 an der Lagersäule 9 ihrer jeweiligen Fahrwerkseinheit 11 bzw. an der beweglichen/lenkbaren Radachse der jeweiligen Fahrwerkseinheit 11 angeordnet sind. Im gezeigten Ausführungsbeispiel sind die Seitenschürzen 13, die Frontschürze 15 und die Haube 15 als voneinander getrennte Matten ausgeführt, könnten allerdings auch zusammen einstückig ausgeführt sein.

Wie dargestellt umschließt die Radabdeckung 12 die Fahrwerkseinheiten 11 jeweils in Arbeitsrichtung a und insbesondere auch quer zur Arbeitsrichtung a nach außen hin bzw. zur Au-βenumgebung hin. Die Umschließung der Fahrwerkseinheit 11 in Arbeitsrichtung a wird dabei von der Frontschürze 14, die seitliche Umschließung von der Seitenschürze 13 bewirkt. Darüber hinaus weist die Radabdeckung 12 noch die Haube 15 auf, die die Fahrwerkseinheiten 11 vertikal nach oben hin zumindest teilweise umschließt und sich auch in den Bereich in Arbeitsrichtung a hinter den Fahrwerkseinheiten 11 bzw. Rädern 10 erstreckt. Teil der Haube 15 ist eine Sichtklappe 15'. Dabei handelt es sich konkret um eine Art Lappenelement, welches getrennt von den übrigen Abdeckungselementen der Radabdeckungseinheit 18 von der in den Figuren gezeigten Abdeckposition, in dem es einen Teil des Isolationsraums um die jeweilige Fahrwerkseinheit 11 nach außen hin abdeckt, in eine Offenposition aufgefaltet werden kann. Dadurch wird eine schräg nach oben gerichtete Öffnung in der Radabdeckungseinheit 18 erhalten, durch die hindurch die Sicht auf die Räder 10 von außerhalb der Radabdeckungseinheit 18 möglich ist. Dies kann zu Inspektionszwecken sinnvoll sein. Die Sichtklappe 15' ist ferner außermittig im zur Außenseite der Bodenverdichtungsmaschine 1 versetzten Bereich angeordnet, um durch den im Maschinenrahmen seitlich vorhandenen Sichtkanal in Form einer Rahmenausnehmung einen Durchblick vom Fahrstand aus zu ermöglichen.

Wie beispielsweise aus Figur 4 hervorgeht, umhüllt die Radabdeckung 12 den vorderen Fahrwerksteil 5 nicht vollständig, sondern lässt insbesondere Bereiche vertikal nach oben und in Arbeitsrichtung a nach hinten im Bereich zwischen den beiden Fahrwerkseinheiten 11 frei. Mit anderen Worten umgibt beziehungsweise umschließt die Radabdeckung 12 die Fahrwerkseinheiten 11 nicht vollständig in denjenigen Bereichen, die entweder an eine weitere Fahrwerkseinheit 11 und/oder den Maschinenrahmen 3, insbesondere eine Radseite 19 des Maschinenrahmens 3, angrenzen. Als Radseite 19 des Maschinenrahmens 3 wird dabei beispielsweise der Radkasten bezeichnet, der die Fahrwerkseinheiten 11 zumindest teilweise umgibt und sie ebenfalls von der Außenumgebung trennt und thermisch isoliert. Insbesondere aus der Darstellung in Figur 3 wird klar, dass trotz dieser unvollkommenen Einhausung durch die Radabdeckung 12 eine vollständige thermische Isolierung des vorderen Fahrwerksteils 5 gegenüber der Außenumgebung realisiert ist, da die Radabdeckung 12 zusammen mit dem Maschinenrahmen 3 bzw. insbesondere der Radseite 19 des Maschinenrahmens 3 das vordere Fahrwerksteil 5 im Wesentlichen vollständig umgibt. Die Radabdeckung 12 ist lediglich an denjenigen Bereichen nicht durchgehend geschlossen ausgebildet, an denen entweder eine benachbarte Fahrwerkseinheit 11 oder der Maschinenrahmen 3, insbesondere die Radseite 19 des Maschinenrahmens 3, für eine entsprechende thermische Isolierung der Fahrwerkseinheiten 11 gegenüber der Außenumgebung sorgt. Alternativ zur gezeigten Ausführungsform ist es selbstverständlich ebenfalls möglich, die Radabdeckung 12 derart auszubilden, dass sie das vordere Fahrwerksteil 5 bzw. die jeweilige Fahrwerkseinheit 11 komplett umschließt.

Wie ebenfalls beispielsweise aus Figur 4 hervorgeht, weist die Radabdeckung 12 bzw. jede Radabdeckungseinheit 18 eine Ausnehmung 21 auf, durch die hindurch die Lagersäule 9 der jeweiligen Fahrwerkseinheit 11 zum Maschinerahmen 3 verläuft. In der Lagersäule 9 verläuft ebenfalls die Lenkachse L, um die die Fahrwerkseinheiten 11 bei einer Kurvenfahrt der Bodenverdichtungsmaschine 1 drehbar gelagert sind. Die Fahrwerkseinheit 11 sind ferner bevorzugt um jeweils eine horizontale Pendelachse pendelbar und die Fahrwerksteile 5 und 6 wiederum um eine Pendelachse pendelbar.

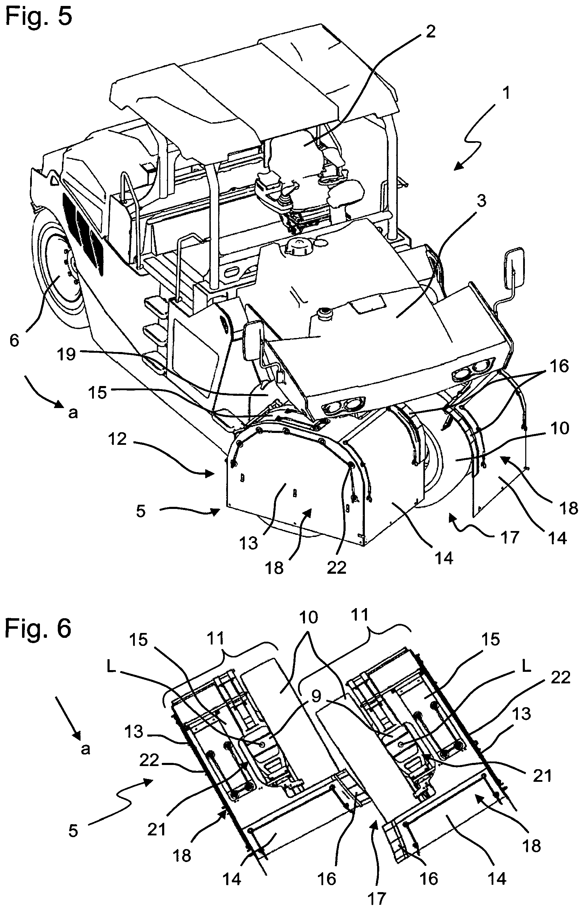

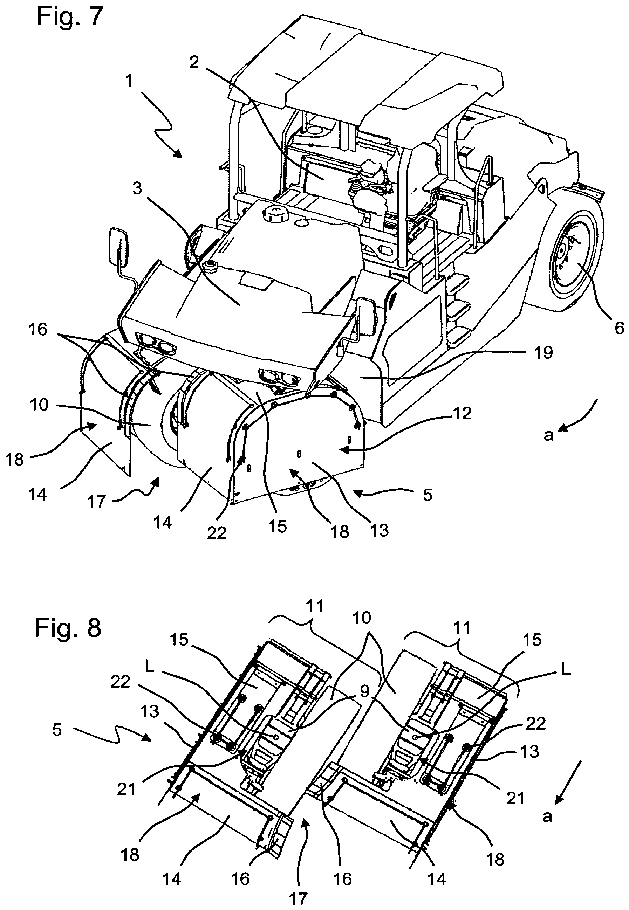

Die Verhältnisse bei einer Linkskurve der Bodenverdichtungsmaschine sind in den Figuren 5 und 6 dargestellt, die Verhältnisse bei einer Rechtskurve in den Figuren 7 und 8. Insbesondere wird deutlich, dass sich bei einer Kurvenfahrt im Vergleich zur Geradeausfahrt ein Zwischenraum 17 zwischen den Radabdeckungseinheiten 18 bzw. zwischen den Frontschürzen 14 der Radabdeckungseinheiten 18 öffnet, der bei Geradeausfahrt, wie in den Figuren 3 und 4 dargestellt, geschlossen ist. Durch diesen Zwischenraum 17 kann während einer Kurvenfahrt Zugluft aus der Außenumgebung an die Räder 10 der Fahrwerkseinheiten 11 gelangen, und dort zu einem Wärmeverlust führen. Da allerdings Kurvenfahrten nur einen äußerst geringen Anteil am Arbeitsbetrieb der Gummiradwalze bzw. der Bodenverdichtungsmaschine 1 haben, kann dieser Wärmeverlust, der äußerst gering ist, in Kauf genommen werden. Um die entsprechenden Wärmeverluste allerdings dennoch zu minimieren, sind an den Frontschürzen 14 Dichtelemente 16 vorgesehen, die jeweils an denjenigen Seiten der Frontschürzen 14 angeordnet sind, die zu einer benachbarten Fahrwerkseinheit 11 bzw. einer benachbarten Frontschürze 14 einer Radabdeckungseinheit 18 ausgerichtet sind. Die Dichtelemente 16, beispielsweise Bürsten, sind derart ausgebildet, dass sie den Zwischenraum 17 bei Geradeausfahrt der Bodenverdichtungsmaschine 1 (siehe Figuren 3 und 4) vollständig verschließen. Dafür liegen die Dichtelemente 16 aneinander an, bzw. überlappen sich oder greifen derart ineinander, dass der Zwischenraum 17 verschlossen ist.

Gleichzeitig sind die Dichtelemente 16 derart ausgebildet, dass sie, bei einer Kurvenfahrt der Bodenverdichtungsmaschine 1 (siehe Figuren 5 bis 8) jeweils am Rad der benachbarten Fahrwerkseinheit 11 anliegen und/oder an dieser entlanggleiten. Auf diese Weise wird der Zugang von Zugluft aus der Außenumgebung in die inneren Bereiche der Fahrwerkseinheiten 11 über den Zwischenraum 17 während einer Kurvenfahrt der Bodenverdichtungsmaschine 1 möglichst gering gehalten. Eine alternative Ausführungsform der Radabdeckung 12 der vorliegenden Erfindung sieht vor, dass auch auf denjenigen Seiten der Fahrwerkseinheiten 11, die benachbart zu einer weiteren Fahrwerkseinheit 11 angeordnet sind, Seitenschürzen 13 angeordnet sind, so dass die jeweilige Radabdeckungseinheit 18, insbesondere zusammen mit dem Maschinenrahmen 3 bzw. der Radseite 19 des Maschinenrahmens 3, die jeweilige Fahrwerkseinheit 11 komplett umschließt. In dieser Ausführungsform ist die Radabdeckung 12 also auch auf der Seite komplett die Fahrwerkseinheit 11 umschließend ausgebildet, an der die Fahrwerkseinheit 11 an eine weitere Fahrwerkseinheit 11 angrenzt. Auf diese Weise kann der entstehende Zwischenraum 17 bei Kurvenfahrten der Bodenverdichtungsmaschine 1 zwar nicht vermieden werden, allerdings gelangt durch den Zwischenraum 17 eindringende Zugluft aus der Außenumgebung nicht ungehindert bis an die Räder 10 der Fahrwerkseinheiten 11 heran, wodurch ein geringerer Wärmeaustausch zwischen den Rädern 10 und der Außenumgebung stattfindet.

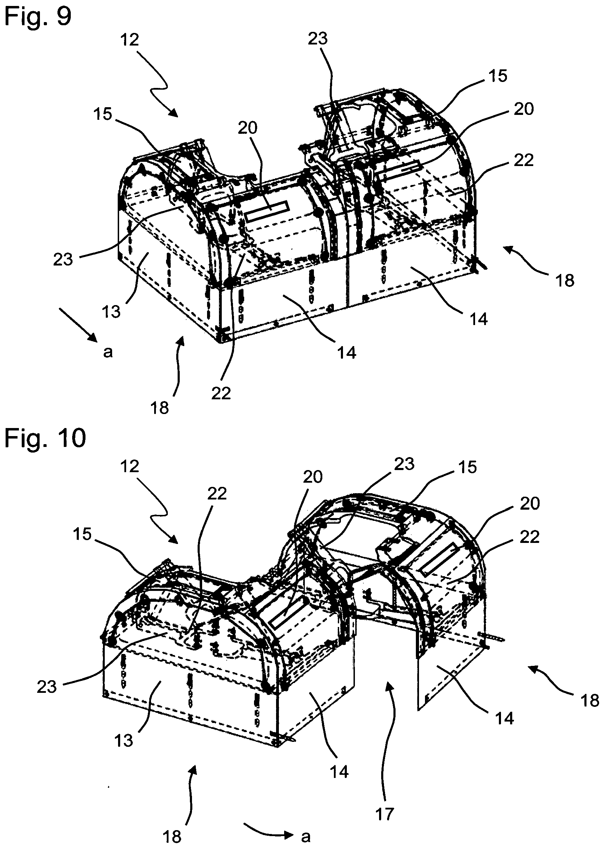

In den Figuren 9 und 10 ist jeweils nur die Radabdeckung 12 bei Geradeausfahrt und in Kurvenfahrt dargestellt. Die Seitenschürzen 13, die Frontschürze 14 und die Haube 15 sind jeweils an einem Montagerahmen 22 befestigt. Der Montagerahmen 22 wiederum ist zur Befestigung an einer Lagersäule 9 (in den Figuren 9 und 10 nicht dargestellt) ausgebildet. Dazu umfasst der Montagerahmen 22 insgesamt vier Stützholme 23, die zwischen den beiden Rädern 10 der Fahrwerkseinheit 11 angeordnet sind und die den Innenraum der Radabdeckungseinheit 18 aufspannen. Jeder der Stützholme 23 ist an einem seiner Enden an die Lagersäule 9 und damit am beweglichen Teil der Lagerachse der Fahrwerkseinheit 11 montierbar ausgebildet. Die Montage erfolgt beispielsweise mit einem Schnellkupplungssystem, so dass die Radabdeckung 12 in ihrer Gesamtheit an einer Bodenverdichtungsmaschine 1 nachrüstbar ausgebildet ist. Darüber hinaus ist an der Radabdeckung 12 eine Abstreifeinrichtung 20 angeordnet, die dazu ausgebildet ist, auf der Lauffläche der Räder 10 anhaftendes Bodenmaterial abzustreifen. Durch die Anordnung der Abstreifeinrichtung 20 an der Radabdeckung 12 bzw. am Montagerahmen 22 der Radabdeckung 12 wird eine zusätzliche Montageeinheit für die Abstreifeinrichtung 20 eingespart, wodurch die gesamte Ausbildung der erfindungsgemäßen Radabdeckung 12 besonders einfach, kompakt und kostengünstig möglich ist. Ergänzend oder alternativ können mit dem Bezugszeichen 20 auch Bürsten, Kokosmatten und/oder Teile einer Berieselungsanlage, wie speziell Sprühbalken oder einzelne Düsen, bezeichnet sein, die entsprechend an den Radabdeckungseinheiten (18) und insbesondere dem Montagerahmen 22 als Tragstruktur angeordnet sein können.

## Patentansprüche

1. Bodenverdichtungsmaschine (1), insbesondere Gummiradwalze, zur Verdichtung eines Bodens (8) in einer Arbeitsrichtung (a), mit
- einem Maschinenrahmen (3),
- einem den Maschinenrahmen (3) tragenden Fahrwerk, umfassend einen vorderen Fahrwerksteil (5) und einen hinteren Fahrwerksteil (6), wobei wenigstens ein Fahrwerksteil (5, 6) wenigstens zwei Fahrwerkseinheiten (11) umfasst, wobei jede Fahrwerkseinheit (11) wenigstens ein Rad (10) aufweist und um eine eigene Lenkachse (L) drehbar ist, und
- einer Radabdeckung (12), die zur thermischen Isolation der Fahrwerkseinheiten (11) gegenüber der Außenumgebung ausgebildet ist,
**dadurch gekennzeichnet,**
**dass** die Radabdeckung (12) wenigstens zwei Radabdeckungseinheiten (18) umfasst, wobei an jeder Fahrwerkseinheit (11) eine Radabdeckungseinheit (18) angeordnet ist, die zusammen mit der jeweiligen Fahrwerkseinheit (11) um die jeweilige eigene Lenkachse (L) rotierbar ausgebildet ist.

2. Bodenverdichtungsmaschine (1) nach Anspruch 1,
**dadurch gekennzeichnet,**
**dass** die Radabdeckungseinheiten (18) derart ausgebildet sind, dass sie bei Geradeausfahrt der Bodenverdichtungsmaschine (1), insbesondere zusammen mit dem Maschinenrahmen (3), sämtliche Fahrwerkseinheiten (11) eines Fahrwerkteils zur Außenumgebung hin im Wesentlichen vollständig umgeben.

3. Bodenverdichtungsmaschine (1) nach einem der vorhergehenden Ansprüche,
**dadurch gekennzeichnet,**
**dass** das wenigstens eine Fahrwerksteil (5, 6), insbesondere genau, zwei Fahrwerkseinheiten (11) mit jeweils einer Radabdeckungseinheit (18) umfasst, und dass jede Radabdeckungseinheit (18) eine Frontschürze (14), eine Haube (15) und eine Seitenschürze (13) aufweist.

4. Bodenverdichtungsmaschine (1) nach Anspruch 3,
**dadurch gekennzeichnet,**
**dass** die Frontschürze (14) und/oder die Seitenschürze (13) und/oder die Haube (15) zusammen einstückig ausgebildet sind.

5. Bodenverdichtungsmaschine (1) nach einem der Ansprüche 3 oder 4,
**dadurch gekennzeichnet,**
**dass** die Haube (15) aus einer Abdeckposition, in der Sie das wenigstens eine Gummirad (10) abdeckt, in eine Offenposition verstellbar ausgebildet ist oder eine zwischen einer Abdeckposition und einer Offenposition verstellbare Sichtklappe (15') umfasst.

6. Bodenverdichtungsmaschine (1) nach einem der vorhergehenden Ansprüche,
**dadurch gekennzeichnet,**
**dass** die Radabdeckungseinheiten (18), insbesondere an den Frontschürzen (14) einer Bodenverdichtungsmaschine gemäß einem der Ansprüche 3 bis 5, jeweils wenigstens ein Dichtelement (16) aufweisen, das derart ausgebildet ist, dass es bei Geradeausfahrt der Bodenverdichtungsmaschine (1) am Dichtelement (16) einer angrenzenden Radabdeckungseinheit (18) anliegt und/oder mit diesem überlappt, so dass ein Zwischenraum (17) zwischen zwei angrenzenden Radabdeckungseinheiten (18) verschlossen ist.

7. Bodenverdichtungsmaschine (1) nach Anspruch 6,
**dadurch gekennzeichnet,**
**dass** die Dichtelemente (16) jeweils eine Bürste umfassen.

8. Bodenverdichtungsmaschine (1) nach einem der Ansprüche 6 oder 7,
**dadurch gekennzeichnet,**
**dass** die Dichtelemente (16) derart ausgebildet sind, dass während einer Kurvenfahrt wenigstens ein Dichtelement (16) im Zwischenraum (17) zwischen zwei angrenzenden Radabdeckungseinheiten (18) an einem Rad (10) der benachbarten Radabdeckungseinheit (18) entlang gleitet beziehungsweise anliegt.

9. Bodenverdichtungsmaschine (1) nach einem der vorhergehenden Ansprüche,
**dadurch gekennzeichnet,**
**dass** die Radabdeckungseinheiten (18) jeweils auf den einander zugewandten Seiten eine zusätzliche Seitenschürze (13) aufweisen, derart, dass jede Radabdeckungseinheit (18), insbesondere zusammen mit dem Maschinenrahmen (3), eine Fahrwerkseinheit (11) zur Außenumgebung hin im Wesentlichen vollständig umgibt.

10. Bodenverdichtungsmaschine (1) nach einem der vorhergehenden Ansprüche,
**dadurch gekennzeichnet,**
**dass** die Radabdeckungseinheiten (18) jeweils eine Ausnehmung (21), insbesondere in der Haube (15), aufweisen, durch die eine Lagersäule (9) der Fahrwerkseinheit (11) mit dem Maschinenrahmen (3) verbunden ist.

11. Bodenverdichtungsmaschine (1) nach einem der vorhergehenden Ansprüche,
**dadurch gekennzeichnet,**
**dass** die Radabdeckungseinheiten (18) einen Montagerahmen (22) umfassen, der an den Fahrwerkseinheiten (11) angeordnet ist und an dem die Frontschürze (14), die Haube (15) und die Seitenschürze (13) befestigbar sind.

12. Bodenverdichtungsmaschine (1) nach einem der vorhergehenden Ansprüche,
**dadurch gekennzeichnet,**
**dass** die Radabdeckungseinheiten (18) und insbesondere der Montagerahmen (22) einer Bodenverdichtungsmaschine gemäß Anspruch 11 als Tragstruktur für weitere Elemente dienen, insbesondere für Bürsten, Kokosmatten, Teile einer Berieselungsanlage, wie speziell Sprühbalken oder einzelne Düsen, oder eine Abstreifeinrichtung (20), die dazu ausgebildet ist, am wenigstens einen Rad (10) der Fahrwerkseinheit (11) anhaftendes Bodenmaterial abzustreifen.

13. Bodenverdichtungsmaschine (1) nach einem der vorhergehenden Ansprüche,
**dadurch gekennzeichnet,**
**dass** jede Fahrwerkseinheit (11) genau zwei Räder (10) aufweist.

## Claims

1. A ground compaction machine (1), in particular a rubber-tire roller, for compacting a ground (8) in a working direction (a), comprising
- a machine frame (3),
- a chassis supporting the machine frame (3), comprising a front chassis section (5) and a rear chassis section (6), at least one chassis section (5, 6) comprising at least two chassis units (11), wherein each chassis unit (11) includes at least one wheel (10) and is rotatable about its own steering axis (L), and
- a wheel cover (12), which is configured to thermally insulate the chassis units (11) from the external surroundings,
**characterized in that**
the wheel cover (12) includes at least two wheel cover units (18), wherein a wheel cover unit (18) is arranged on each chassis unit (11) and is configured to be rotatable together with the chassis unit (11) about its own steering axis (L).

2. The ground compaction machine (1) according to claim 1,
**characterized in that**
the wheel cover units (18) are configured in such a way that they essentially completely surround all chassis units (11) of a chassis section from the external surroundings, in particular together with the machine frame (3), when the ground compaction machine (1) is driving straight ahead.

3. The ground compaction machine (1) according to one of the preceding claims,
**characterized in that**
the at least one chassis section (5, 6) comprises, in particular exactly, two chassis units (11) respectively comprising a wheel cover unit (18), and **in that** each wheel cover unit (18) comprises a front skirt (14), a hood (15) and a lateral skirt (13).

4. The ground compaction machine (1) according to claim 3,
**characterized in that**
the front skirt (14) and/or the lateral skirt (13) and/or the hood (15) together are configured as a single piece.

5. The ground compaction machine (1) according to one of claims 3 or 4,
**characterized in that**
the hood (15) is configured to be adjustable from a cover position, in which it covers the at least one rubber tire (10), to an open position, or includes a viewing flap (15') that is adjustable between a cover position and an open position.

6. The ground compaction machine (1) according to one of the preceding claims,
**characterized in that**
the wheel cover units (18), in particular on the front skirts (14) of a ground compaction machine according to claims 3 to 5, respectively comprise at least one sealing element (16) that is configured in such a way that it presses against a sealing element (16) of an adjacent wheel cover unit (18) and/or overlaps with the latter so that a gap (17) between two adjacent wheel cover units (18) is closed when the ground compaction machine (1) is driving straight ahead.

7. The ground compaction machine (1) according to claim 6,
**characterized in that**
each sealing element (16) includes a brush.

8. The ground compaction machine (1) according to one of claims 6 or 7,
**characterized in that**
the sealing elements (16) are configured in such a way that at least one sealing element (16) slides along or presses against a wheel (10) of a neighboring wheel cover unit (18) in the gap (17) between two adjacent wheel cover units (18) when the ground compaction machine is turning.

9. The ground compaction machine (1) according to one of the preceding claims,
**characterized in that**
the wheel cover units (18) respectively comprise an additional lateral skirt (13) on the sides facing each other so that each wheel cover unit (18) essentially completely surrounds a chassis unit (11) from the external surroundings, in particular together with the machine frame (3).

10. The ground compaction machine (1) according to one of the preceding claims,
**characterized in that**
the wheel cover units (18) each comprise a recess (21), in particular in the hood (15), through which a support column (9) of the chassis unit (11) is connected with the machine frame (3).

11. The ground compaction machine (1) according to one of the preceding claims,
**characterized in that**
the wheel cover units (18) comprise a mounting frame (22) which is arranged on the chassis units (11) and to which the front skirt (14), the hood (15) and the lateral skirt (13) can be fastened.

12. The ground compaction machine (1) according to one of the preceding claims,
**characterized in that**
the wheel cover units (18) and in particular the mounting frame (22) of a ground compaction machine according to claim 11 act as a support structure for further elements, in particular for brushes, coconut matting, parts of a sprinkling system such as specifically spraying beams or individual nozzles, or a stripping device (20) configured to strip off ground material adhering to the at least one wheel (10) of the chassis unit (11).

13. The ground compaction machine (1) according to one of the preceding claims,
**characterized in that**
each chassis unit (11) comprises exactly two wheels (10).

## Revendications

1. Engin (1) de compactage du sol, en particulier rouleau compacteur à pneus, destiné au compactage d'un sol (8) dans une direction (a) de déplacement, comprenant :
- un châssis (3) de machine,
- un train de roulement supportant le châssis (3) de la machine, comprenant une section de train de roulement avant (5) et une section de train de roulement arrière (6), au moins une section de train de roulement (5, 6) comprenant au moins deux unités (11) de train de roulement, dans lequel chaque unité (11) de train de roulement comprend au moins une roue (10) qui peut être entraînée en rotation autour de son axe de direction (L), et
- un capot (12) de roues, qui est configuré pour isoler thermiquement les unités (11) de train de roulement de l'environnement extérieur,
***caractérisé en ce que***
le capot (12) de roues comprend au moins deux unités (18) de capots de roues, dans lequel une unité (18) de capot de roues est disposée sur chaque unité (11) de train de roulement et est configurée pour pouvoir être entraînée en rotation conjointement avec l'unité (11) de train de roulement autour de son propre axe de direction (L).

2. Engin (1) de compactage du sol selon la revendication 1,
***caractérisé en ce que***
les unités (18) de capot de roues sont configurées de telle manière qu'elles entourent sensiblement en totalité toutes les unités (11) de train de roulement d'une section de train de roulement vis-à-vis de l'environnement extérieur, en particulier conjointement avec le châssis (3) de machine, lorsque l'engin (1) de compactage du sol avance tout droit.

3. Engin (1) de compactage du sol selon l'une quelconque des revendications précédentes,
***caractérisé en ce que***
ladite au moins une section (5, 6) de train de roulement comprend, en particulier exactement, deux unités (11) de train de roulement comprenant respectivement une unité (18) de capot de roues, et ***en ce que*** chaque unité (18) de capot de roues comprend une jupe avant (14), une calotte (15) et une jupe latérale (13).

4. Engin (1) de compactage du sol selon la revendication 3,
***caractérisé en ce que***
la jupe avant (14) et/ou la jupe latérale (13) et/ou la calotte (15) ensemble sont configurées en une pièce unique.

5. Engin (1) de compactage du sol selon l'une quelconque des revendications 3 ou 4,
***caractérisé en ce que***
la calotte (15) est configurée pour être réglable d'une position de couverture dans laquelle elle recouvre ledit au moins un pneumatique (10), à une position ouverte, ou comprend une trappe (15') de contrôle visuel qui est réglable entre une position de fermeture et une position ouverte.

6. Engin (1) de compactage du sol selon l'une quelconque des revendications précédentes,
***caractérisé en ce que***
les unités (18) de capot de roues, en particulier sur les jupes avant (14), d'un engin de compactage du sol selon les revendications 3 à 5, comprennent respectivement au moins un élément d'étanchéité (16) qui est configuré de manière telle qu'il appuie sur un élément d'étanchéité (16) adjacent à une unité (18) de capot de roues et/ou se chevauche avec cette dernière de façon qu'un espace libre (17) entre deux unités (18) de capot de roues adjacentes soit fermé lorsque l'engin (1) de compactage de roue avance tout droit.

7. Engin (1) de compactage du sol selon la revendication 6,
***caractérisé en ce que***
chaque élément d'étanchéité (16) comprend une brosse.

8. Engin (1) de compactage du sol selon l'une quelconque des revendications 6 ou 7,
***caractérisé en ce que***
les éléments d'étanchéité (16) sont configurés de telle manière qu'au moins un élément d'étanchéité (16) glisse le long de, ou appuie sur, une roue (10) d'une unité (18) de capot de roue voisine dans l'espace libre (17) entre deux unités (18) de capot de roues adjacentes lorsque l'engin de compactage du sol est en train de tourner.

9. Engin (1) de compactage du sol selon l'une quelconque des revendications précédentes,
***caractérisé en ce que***
les unités (18) de capot de roues comprennent respectivement une jupe latérale supplémentaire (13) sur les côtés en vis-à-vis de telle sorte que chaque unité (18) de capot de roues entoure sensiblement en totalité une unité (11) de train de roulement vis-à-vis de l'environnement extérieur, en particulier conjointement avec le châssis (3) de machine.

10. Engin (1) de compactage du sol selon l'une quelconque des revendications précédentes,
***caractérisé en ce que***
les unités (18) de capot de roues comprennent chacune un évidement (21), en particulier dans la calotte (15), à travers lequel une colonne de support (9) d'une unité (11) de train de roulement est reliée au châssis (3) de machine.

11. Engin (1) de compactage du sol selon l'une quelconque des revendications précédentes,
***caractérisé en ce que***
les unités (18) de capot de roues comprennent un cadre de montage (22) qui est disposé sur les unités (11) de train de roulement et auquel la jupe avant (14), la calotte (15) et la jupe latérale (13) peuvent être fixées.

12. Engin (1) de compactage du sol selon l'une quelconque des revendications précédentes,
***caractérisé en ce que***
les unités (18) de capot de roues, et en particulier le cadre de montage (22) d'un engin de compactage du sol selon la revendication 11, agissent comme structure de support pour d'autres éléments, en particulier pour des brosses, des nattes de fibres de coco, des éléments d'un système d'arrosage tels que des barres de pulvérisation spéciales ou des buses individuelles, ou un dispositif (20) de raclage configuré pour racler le matériau du sol adhérant à ladite au moins une roue (10) de l'unité (11) de train de roulement.

13. Engin (1) de compactage du sol selon l'une quelconque des revendications précédentes,
***caractérisé en ce que***
chaque unité (11) de train de roulement comprend exactement deux roues (10).
